(19) Europäisches Patentamt
European Patent Office
Office européen des brevets

(11) **EP 0 832 370 B1**

(12) **EUROPÄISCHE PATENTSCHRIFT**

(45) Veröffentlichungstag und Bekanntmachung des Hinweises auf die Patenterteilung:
**18.12.2002 Patentblatt 2002/51**

(21) Anmeldenummer: **96928318.3**

(22) Anmeldetag: **23.07.1996**

(51) Int Cl.⁷: **F16D 48/06**

(86) Internationale Anmeldenummer:
**PCT/DE96/01347**

(87) Internationale Veröffentlichungsnummer:
**WO 97/017552 (15.05.1997 Gazette 1997/21)**

(54) **SYSTEM ZUR STEUERUNG EINER SERVOKUPPLUNG**

SERVO-CLUTCH CONTROL SYSTEM

SYSTEME DE COMMANDE D'EMBRAYAGE AUTOMATIQUE

(84) Benannte Vertragsstaaten:
**DE ES FR IT**

(30) Priorität: **03.11.1995 DE 19540921**

(43) Veröffentlichungstag der Anmeldung:
**01.04.1998 Patentblatt 1998/14**

(73) Patentinhaber: **ROBERT BOSCH GMBH**
**70442 Stuttgart (DE)**

(72) Erfinder:
- **GROB, Ferdinand**
  **D-74354 Besigheim (DE)**
- **SCHÖTTLE, Richard**
  **D-75417 Mühlacker (DE)**

(56) Entgegenhaltungen:
**EP-A- 0 493 840**
**EP-A- 0 494 608**
**EP-A- 0 645 277**
**DE-A- 4 331 909**
**FR-A- 2 645 805**
**US-A- 4 829 221**
**US-A- 5 458 545**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 832 370 B1

Printed by Jouve, 75001 PARIS (FR)

**Beschreibung**

Stand der Technik

Automatische Kupplungen bzw. Servokupplungen sind beispielsweise bekannt aus "Kraftfahrtechnisches Taschenbuch, Auflage, 1991, Seiten 538 und 539. Servokupplungen bieten in Verbindung mit elektronischen Steuergeräten entweder einen automatisierten Anfahrvorgang oder, zusammen mit servobetätigten Schaltgetrieben, ein vollautomatisches Getriebe. Bei solchen Servokupplungen wird das Öffnen und Schließen der Kupplung im allgemeinen durch einen Servoantrieb getätigt. Die Ansteuerung dieses Servoantriebs sollte dabei ein gewünschtes Kupplungsmoment realisieren. Hierzu mußte aber der Zusammenhang zwischen der Verstellung des Servomotors und dem von der Kupplung zu übertragenden Kupplungsmoment bekannt sein.

Aus der EP 0 493 840 A2 ist ein System zur Steuerung einer Servokupplung mit den Merkmalen des Oberbegriffs des Anspruchs 1 bekannt. Bei diesem System wird die Reibleistung der Kupplung berechnet. Hierzu wird zunächst das Motorausgangsmoment aus einem Datenspeicher abhängig von der Fahrpedalstellung und der momentanen Motordrehzahl ermittelt und dann die Reibleistung abhängig vom Kupplungsschlupf ermittelt. Da für die Berechnung der Reibleistung das von der Kupplung übertragene Drehmoment relevant ist, wird von dem aus dem Datenspeicher ausgelesenen Motorausgangsmoment, welches abhängig von der Fahrpedalstellung und der momentane Motordrehzahl ist, ein Korrekturwert abgezogen, der durch Multiplikation der zeitlichen Motordrehzahländerung mit dem Trägheitsmoment des Motors berechnet wird. Die Ansteuerung der Kupplung im Normalbetrieb geschieht abhängig von der Motordrehzahl und ggf. weiterer Parameter, insbesondere abhängig von der Fahrpedalstellung.

Die Aufgabe der Erfindung wird darin gesehen, die Kupplungsteuerung zu optimieren und Einflüsse von Kupplungsverschleiß und Exemplarstreuungen zu korrigieren.

Vorteile der Erfindung

Die Erfindung sieht vor, daß die Steuereinheit derart ausgelegt ist, daß während Ein- und/oder Ausrückvorgängen der Servokupplung der aktuelle Ein- und/oder Ausrückweg und eine aus dem erfaßten momentanen Moment des Fahrzeugmotors und der erfaßten zeitlichen Änderung der Drehzahl des Fahrzeugmotors ermittelte, das aktuelle Kupplungsmoment repräsentierende Größe erfaßt wird.

Dabei wird die Kombination des erfaßten Ein- und/oder Ausrückweges und der Größe, die das aktuelle Kupplungsmoment repräsentiert, zur Bildung oder Veränderung einer Kennlinie gespeichert. Man gelangt so zu einem aktuellen Zusammenhang zwischen der Ansteuerung des Stellgliedes und dem übertragenen Kupplungsmoment. Dabei werden vorteilhaft die Kupplungsbetätigungen, die programmgemäß im Normalbetrieb getätigt werden, genützt. Vorteilhaft wird die gespeicherte Kennlinie zur Steuerung des durch die Servokupplung übertragenen Kupplungsmoments herangezogen.

Eine Weiterentwicklung der Erfindung sieht vor, daß das Stellglied einen Schrittmotor aufweist. Die Anzahl der Impulse, mit denen dieser Schrittmotor beaufschlagt wird, ist dabei ein Maß für dessen relativen Drehwinkel und somit ein direktes Maß für den Ein-bzw. Ausrückweg der Kupplung. Bei dieser Variante ist ein Sensor, der den Ein- bzw. Ausrückweg der Kupplung mißt, überflüssig.

Bei dieser Weiterentwicklung ist vorgesehen, daß nach einem jeden Ausrückvorgang (schließen der Kupplung) oder bei bestimmten Ausrückvorgängen eine definierte Ansteuerung des Schrittmotors getätigt wird. Insbesondere ist daran gedacht, daß zur Betätigung der Kupplung eine durch den Schrittmotor in ihre Längsrichtung verschiebbare Zahnstange vorgesehen ist. Nach einem jeden Ausrückvorgang (Schließen der Kupplung) oder nach bestimmten Ausrückvorgängen wird die Zahnstange durch eine Ansteuerung des Schrittmotors in eine definierte Position, vorzugsweise an einen mechanischen Anschlag, gefahren. Dieser Anschlag ist dann der Kalibrierpunkt für den Motor, d. h. in dieser definierten Position wird der Drehwinkel gleich Null gesetzt. Damit ist die Anzahl der beaufschlagten Impulse ein Maß für den absoluten Drehwinkel des Motors und damit ein Maß für den Einrückweg der Kupplung. Der erwähnte Wegsensor kann damit vorteilhafterweise entfallen. Der Schrittmotor kann bei jedem oder bestimmten Kupplungsvorgängen neu kalibriert werden, wodurch sich ein sicheres und robustes System ergibt.

Weitere vorteilhafte Ausgestaltungen sind in Unteranspüchen zu entnehmen.

Zeichnung

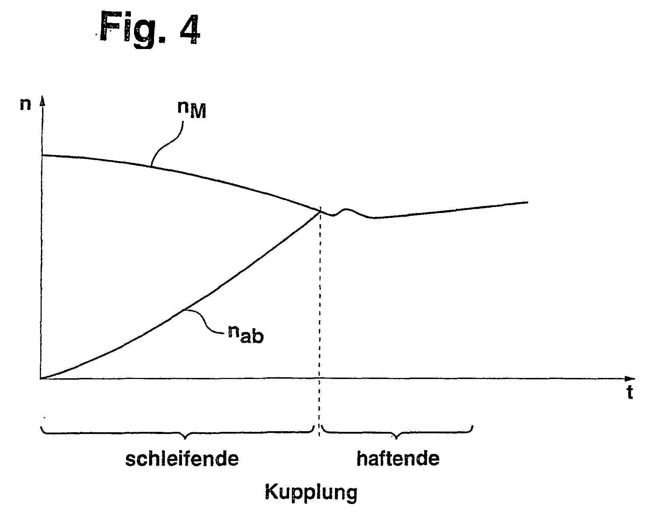

Die Figuren 1a und 1b zeigen schematisch den Aufbau des erfindungsgemäßen Systems in zwei Varianten. Die Figur 2 zeigt detaillierter anhand eines Blockschaltbildes die Funktionsweise des Steuergerätes, während die Figur 3 ein Ablaufdiagramm des die Erfindung betreffenden Teils des Steuergeräts wiedergibt. Die Figur 4 zeigt die Ein- bzw. Ausgangsdrehzahlen der Kupplung während eines Einkuppelvorgangs.

Ausführungsbeispiel

Anhand der im folgenden beschriebenen Ausführungsbeispiele soll die Erfindung verdeutlicht werden.

Die Figuren 1a und 1b zeigen zwei Varianten einer Servokupplung, wobei die gleichen Bauteile mit den selben Bezugszeichen versehen sind. Der einzige Unterschied zwischen der in der Figur 1a und der in der Figur 1b gezeigten Servokupplung besteht in der Ausgestaltung des Servomotors 1105 bzw. 1105'. In der Variante gemäß 1a handelt es sich bei dem Stellmotor 1105 um einen Stellmotor, dessen Ausgangsdrehwinkel kontinuierlich verstellbar ist. Bei dem in der Figur 1b zu sehenden Stellmotor 1105' handelt es sich um einen Schrittmotor, bei dem der Drehwinkel der Ausgangswelle schrittweise, d. h. in definierten Winkeln, verstellbar ist. Bei der in der Figur 1b gezeigten Variante fehlt das Wegpotentiometer 1106 zur Bestimmung des Einrückweges S. Statt dessen weist die in der Figur 1b zu sehende Servokupplung einen mechanischen Anschlag 1109 auf, dessen Funktion noch beschrieben wird.

Die Figuren 1a und b zeigen mit dem Bezugszeichen 10 einen Fahrzeugmotor, dessen Ausgangswelle mit der Schwungscheibe 1101 der Servokupplung 11 verbunden ist. Abtriebsseitig führt die Servokupplung 11 zu dem Getriebe 12. Der Steuereinheit 13 wird die Motordrehzahl $n_M$ und das Motormoment $M_M$ zugeführt. Bei der in der Figur 1a zu sehenden Variante wird der Steuereinheit 13 zusätzlich noch der aktuelle Einrückweg S ist zugeleitet. Abhängig von diesen Eingangssignalen steuert die Steuereinheit 13 den Servomotor 1105 bzw. 1105' mittels der Signale St bzw. Sp zur Verstellung der Kupplung an.

Das Motormoment $M_M$ wird dabei der Steuereinheit 13 von der Motorsteuereinheit 101 zugeführt. Das Motormoment $M_M$ kann aber auch anhand von den Betriebsdaten (bspw. Last, Motordrehzahl) des Motors im Kupplungssteuergerät 13 berechnet werden. Ein Drehzahlsensor 102 liefert die Motordrehzahl $n_M$, wobei dieses Signal im allgemeinen, ebenso wie das Motormoment $M_M$, im Motorsteuergerät 101 vorliegt und von dort der Steuereinheit 13 zugeführt werden kann.

Die Kupplung an sich ist in bekannter Weise mit einer Schwungscheibe 1101, einer Kupplungsscheibe 1110, einer Druckplatte 1111, einem Federelement (Tellerfeder) 1102 und dem Ausrücklager 1112 ausgestattet. Das Drehmoment, das von der Kupplung im schleifenden Betrieb übertragen wird, das Kupplungsmoment $M_K$, ist unter anderem durch die Vorspannung der Tellerfeder 1102 gegeben. Die Vorspannung der Tellerfeder 1102 ist wiederum abhängig vom Einrückweg S des Kupplungsgestänges, das in diesem Ausführungsbeispiel als Zahnstange 1104 ausgebildet ist. Die Zahnstange 1104 wird durch die Ausgangswelle des Stellmotors 1105 bzw. Schrittmotors 1105' betätigt. Im Normalbetrieb der Kupplung wird der Weg S, also der Einrückweg, über einen Regelkreis abhängig von einem Sollwert $S_{soll}$ (Figur 2) angeregelt. Damit läßt sich über den Sollwert $S_{soll}$ das Kupplungsmoment steuern.

Während in den Figuren 1a und 1b der Einrückweg S als Stellgröße der Servokupplung dargestellt ist, kann selbstverständlich auch der Drehwinkel des Stellmotors 1105 bzw. 1105' oder die Kraft auf die Tellerfeder 1102 als Stellgröße dienen. Bei einem zwischen Kupplung und Steller zwischengeschalteten Hydraulikkreis kann als Stellgröße der Druck im Hydrauliksystem verwendet werden. Die nachfolgend verwendete Größe S stellt daher ganz allgemein die Stellgröße für das Kupplungsmoment im schleifenden Zustand dar.

Ein besonders einfaches System ist in der Figur 1b zu sehen, wobei als Stellmotor ein Schrittmotor 1105' verwendet wird. Die Anzahl der Impulse, mit denen der Motor 1105' beaufschlagt wird, ist ein Maß für dessen relativen Drehwinkel. Auf diese Weise kann auf eine aufwendige Erfassung des aktuellen Einrückweges $S_{ist}$ durch das Wegpotentiometer 1106 (Figur 1a) verzichtet werden.

Bei jedem Ausrückvorgang (Schließen der Kupplung) wird die Zahnstange 1104 bei der in der Figur 1b gezeigten Variante bis zu einem mechanischen Anschlag 1109 zurückgefahren. Dieser Anschlag 1109 ist der Kalibrierpunkt für den Motor, d. h., daß dann, wenn die Zahnstange 1104 den Anschlag 1109 erreicht, auf den Drehwinkel Null kalibriert wird. Damit ist die Anzahl der Impulse (Signale Sp des Steuergeräts 13, Figur 1b), mit denen der Schrittmotor 1105' beaufschlagt wird, ein Maß für den absoluten Drehwinkel des Motors und damit ein Maß für den aktuellen Einrückweg $S_{ist}$. Der Wegsensor 1106 kann also damit entfallen, der Schrittmotor 1105' kann bei jedem Kupplungsvorgang oder bei ausgewählten Kupplungsvorgängen neu kalibriert werden, wodurch sich ein sicheres und robustes System ergibt.

Wird die Stellgröße S, in diesen Ausführungsbeispielen der Einrückweg, über einen Regelkreis abhängig von einem Sollwert $S_{soll}$ eingeregelt, so ist es dabei nachteilig, daß der Zusammenhang zwischen dem Einrückweg S bzw. Sollwert $S_{soll}$ und dem übertragenen Kupplungsmoment $M_K$ unbekannt ist. Dieser Zusammenhang ist im Block 131 der Figur 2 skizziert. Hier ist zu sehen, daß das übertragene Kupplungsmoment $M_K$ innerhalb eines gewissen Totweges $\tau$ zunächst unverändert bleibt, um dann im Gleitzustand mit der Erhöhung des Weges S abzunehmen.

Zwar ließe sich für ein einzelnes Kupplungsexemplar der oben erwähnte Zusammenhang zwischen dem Kupplungsmoment und dem Einrückweg technisch ermitteln, jedoch sind lebensdauerabhängige Änderungen (beispielsweise Verschleiß) und Exemplarstreuungen so groß, daß die Funktion $M_K = f(S)$ praktisch nicht bekannt ist.

Des weiteren ließe sich durch den Einbau eines Drehmomentensensors das Kupplungsmoment $M_K$ meßtechnisch erfassen und mittels eines Regelkreises einregeln. Aufgrund der hohen Kosten eines Drehmomentensensors und der erforderlichen hohen Dynamik des Regelkreises ist dies jedoch keine seriengeeignete Lösung.

Wie schon eingangs erwähnt, ist es also das Ziel der Erfindung, die Funktion $M_K = f(S)$ während des normalen Fahrzeugbetriebes zu ermitteln, in einem nichtflüchtigen Speicher (Block 131, Figur 2) abzulegen und über die Lebensdauer der Kupplung adaptiv zu korrigieren. Hierzu soll zunächst anhand der Figur 2 detaillierter auf die Funktionen der Steuereinheit 13 eingegangen werden.

In der Steuereinheit 13 wird dem Block 131 ein einzustellendes Kupplungsmoment $M_{Ksoll}$ zugeführt. Auf die Ermittlung dieses gewünschten Kupplungsmoments soll hier nicht eingegangen werden, da die Erfindung nicht die Ermittlung dieses gewünschten Kupplungsmoments betrifft, sondern dessen Einstellung. Im Block 131 ist der schon erwähnte Zusammenhang zwischen dem Kupplungsmoment $M_K$ und dem Einrückweg S bzw. in allgemeiner Form der Stellgröße, abgespeichert. Hieraus wird dann als Ausgangsgröße des Blocks 131 die Soll-Stellgröße $S_{soll}$ einen Komperator 132 zugeführt, der die Soll-Stellgröße $S_{soll}$ mit dem entsprechenden Ist-Stellgrößenwert $S_{ist}$ vergleicht und abhängig von diesem Vergleich in der Servokupplung 11 den Stellmotor 1105(Stellsignal ST) bzw. den Schrittmotor 1105' (Stellgröße Sp) zur Einstellung der Sollgröße $S_{soll}$ ansteuert.

Der Kern der Erfindung besteht nun darin, daß ein Block 133 vorgesehen ist, mittels dem die im Block 131 gespeicherte Kennlinie verändert und an den aktuellen Zustand der Kupplung angepaßt werden kann. Hierzu wird dem Block 133 der momentane Istwert $S_{ist}$ der Stellgröße, die Motordrehzahl $n_M$ und das aktuelle Motarmoment $M_M$ zugeführt.

Zur Beschreibung eines Ausführungsbeispiels soll zunächst anhand der Figur. 4 ein typischer Einkuppelvorgang geschildert werden. Hierzu sind in der Figur 4 die zeitlichen Verläufe der Motordrehzahl $n_M$ und der Abtriebsdrehzahl $n_{ab}$ der Kupplung dargestellt. Im Bereich der schleifenden Kupplung nähert sich in bekannterweise die Abtriebsdrehzahl an die Motordrehzahl, um im Bereich der haftenden Kupplung übereinzustimmen. Im Bereich der schleifenden Kupplung gilt:

$$M_K = M_M - \Theta_M * \omega'_M$$

mit

$$M_K = f(S)$$

$\Theta_M$ = Motorträgheitsmoment
$\omega_M = \frac{2 \cdot \pi}{60} n_M$
$n_M$ = Motordrehzahl
$M_M$ = Motbrmoment
$M_K$ = Kupplungsmoment

Die Größen $M_M$, $\Theta_M$ und $\omega_M$ (bzw. dessen zeitliche Ableitung $\omega'_M$) sind bekannt bzw. meßbar (Motorsteuergerät 101 in der Figur 1a und 1b), womit auch das zu jedem Zeitpunkt momentan übertragene Kupplungsmoment $M_K$ bekannt ist.

Damit lassen sich für jeden Stellgrößenwert S während eines Einkuppelvorgangs im schleifenden Bereich für die gesuchte Funktion

$$M_K = f(S)$$

Wertepaare für $M_K$ und S ermitteln. Diese Werte werden, wie schon anhand der Figur 2 beschrieben, vom Block 133 zum Block 131 geleitet, wo sie zur Änderung bzw. Aktualisierung der dort gespeicherten Kennlinie verwendet werden.

Anhand der Figur 3 soll nun die genaue Funktionsweise des Blocks 133 dargestellt werden. Nach dem Startschritt 701 wird im Schritt 702 abgefragt, ob ein geeigneter Kupplungsvorgang K vorliegt. Hierzu kann jeder Kupplungsvorgang zur Adaption der Kennlinie verwendet wird oder bestimmte Kupplungsvorgänge ausgewählt werden. Insbesondere kann vorgesehen sein, daß nicht jeder Kupplungsvorgang herangezogen wird, sondern jeder n-te Kupplungsvorgang. Liegt ein geeigneter Kupplungsvorgang vor, so wird in Schritt 703 die momentane Stellgröße $S_{ist}$, das aktuelle Motormoment $M_M$, das Motorträgheitsmoment $\Theta_M$ und die aktuelle Motordrehzahl $n_M$ eingelesen. Im Schritt 704 werden, wie schon beschrieben, die zeitliche Änderung der Motordrehzahl und das aktuell übertragene Kupplungsmoment $M_K$ berechnet. Im Schritt 705 wird das Wertepaar Kupplungsmoment $M_K$ und momentane Stellgröße $S_{ist}$ durch Zuleitung zum Block 131 (Figur 2) gespeichert. Nach dem Endschritt 706 wird der in der Figur 3 dargestellte Ablauf erneut gestartet.

Zusammenfassend sei angemerkt, daß die Ermittlung des Zusammenhangs zwischen Kupplungsmoment im schleifenden Betrieb und der Steuergröße (Sollwert) während des normalen Fahrzeugbetriebes stattfindet. Die Einflüsse von Kupplungsverschleiß und Exemplarstreuungen werden adaptiv korrigiert, und als Sollwert für die Stellgröße wird direkt das zu übertragende Drehmoment, z. B. über eine Drehmomentenschnittstelle (CAN), vorgegeben. Der Einsatz eines Schrittmotors als Stellmotor für die Kupplungsbetätigung ist dabei besonders vorteilhaft, wobei die Kalibrierung der Nullstellung des Motors (Drehwinkel Null) an einem mechanischen Anschlag bei geschlossener und/oder geöffneter Kupplung stattfindet.

Weiterhin kann der Ersatz des Drehmomentwandlers eines konventionellen Automatikgetriebes durch die erfindungsgemäße Servokupplung vorgesehen sein. Durch den Wegfall des Wandlerschlupfes erhöht sich der Wirkungsgrad eines derartigen, ebenfalls zugkraftunterbrechungsfreien Automatikgetriebes.

**Patentansprüche**

1. System zur Steuerung einer zwischen einem Fahrzeugmotor (10) und einem Getriebe (12) angeordneten Servokupplung (11), bei der zum Wechsel der Getriebeübersetzung das Öffnen und Schließen der Kupplung mittels eines Ein- und Ausrückens eines von einer Steuereinheit (13) mittels einer Stellgröße (S) gesteuerten Stellgliedes (1105) geschieht, und die Steuereinheit (13) derart ausgelegt ist, daß

- während Ein- und/oder Ausrückvorgängen die Stellgröße ($S_{ist}$) und eine aus dem erfaßten momentanen Momemt ($M_M$) des Fahrzeugmotors (10) und der erfaßten zeitlichen Änderung ($n_M$') der Drehzahl des Fahrzeugmotors (10) ermittelte, das aktuelle Kupplungsmoment repräsentierende Größe ($M_K$) erfaßt wird und

**dadurch gekennzeichnet, daß**

- die Kombination der erfaßten Stellgröße ($S_{ist}$) und der Größe ($M_K$) zur Bildung oder Veränderung einer Kennlinie (131) gespeichert wird und
- die gespeicherte Kennlinie (131) zur Steuerung des durch die Servokupplung übertragenen Kupplungsmoments ($M_K$) herangezogen wird.

2. System nach Anspruch 1, **dadurch gekennzeichnet, daß** als Stellgröße der Einrückweg (S), der Drehwinkel eines als Stellmotor (1105, 1105') ausgebildeten Stellgliedes, die Kraft auf ein elastisches Element der Kupplung und/oder der Druck eines zwischen der Kupplung und dem Stellantrieb zwischengeschalteten Hydrauliksystems genommen wird.

3. System nach Anspruch 1, **dadurch gekennzeichnet, daß** das Stellglied einen Schrittmotor (1105') aufweist.

4. System nach Anspruch 3, **dadurch gekennzeichnet, daß** nach einem jedem Ausrückvorgang oder bestimmten Ausrückvorgängen eine definierte Ansteuerung (Sp) des Schrittmotor (1105') getätigt wird.

5. System nach Anspruch 3, **dadurch gekennzeichnet, daß** zur Betätigung der Kupplung eine durch den Schrittmotor (1105') in ihre Längsrichtung verschiebbare Zahnstange (1104) vorgesehen ist und nach einem jedem Ausrückvorgang oder bestimmten Ausrückvorgängen die Zahnstange (1104) durch Ansteuerung (Sp) des Schrittmotors (1105') in eine definierte Position, vorzugsweise an einen mechanischen Anschlag (1109), gefahren wird.

## Claims

1. System for controlling a servo-clutch (11) which is arranged between a vehicle engine (10) and a transmission (12) and in which, to change the transmission ratio, the opening and closing of the clutch take place by means of an engagement and disengagement of an actuator (1105) controlled by a control unit (13) by means of a regulating variable (S), the control unit (13) being designed in such a way that

- during engagement and/or disengagement operations the regulating variable ($S_{ist}$) and a variable ($M_K$) which is determined from the detected instantaneous torque ($M_M$) of the vehicle engine (10) and from the detected change in time ($n_M$') of the rotational speed of the vehicle engine (10) and which represents the current clutch torque is detected, and

**characterized in that**

- the combination of the detected regulating variable ($S_{ist}$) and of the variable ($M_K$) is stored for the purpose of forming or modifying a characteristic curve (131), and
- the stored characteristic curve (131) is used for controlling the clutch torque ($M_K$) transmitted by the servo-clutch.

2. System according to Claim 1, **characterized in that** the engagement travel (S), the angle of rotation of an actuator designed as a servomotor (1105, 1105'), the force on an elastic element of the clutch and/or the pressure of a hydraulic system interposed between the clutch and the actuating drive is taken as the regulating variable.

3. System according to Claim 1, **characterized in that** the actuator has a stepping motor (1105').

4. System according to Claim 3, **characterized in that**, after each disengagement operation or specific disengagement operations, a defined activation (Sp) of the stepping motor (1105') is performed.

5. System according to Claim 3, **characterized in that**, to actuate the clutch, a rack (1104) displaceable in its longitudinal direction by means of the stepping motor (1105') is provided, and, after each disengagement operation or specific disengagement operations, the rack (1104) is moved into a defined position, preferably against a mechanical stop (1109), by activation (Sp) of the stepping motor (1105').

## Revendications

1. Système de commande d'un embrayage assisté (11) installé entre un moteur de véhicule (10) et une boîte de vitesse (12) selon lequel, pour changer le rapport de transmission on ouvre et on ferme l'embrayage par l'embrayage et le débrayage d'un actionneur (1105) commandé par une unité de commande (13) suivant une grandeur de réglage (S) et l'unité de commande (13) est conçue pour que :

- pendant les opérations d'embrayage et/ou de débrayage on saisit la grandeur de réglage ($S_{reel}$) et une grandeur obtenue à partir du couple instantané saisi ($M_M$) du moteur (10) du véhicule et de la variation dans le temps ($n_M$'), saisie du régime du moteur (10) du véhicule, grandeur qui représente le couple d'embrayage actuel ($M_K$),

**caractérisé en ce que**

- on enregistre la combinaison de la grandeur de réglage saisie ($S_{reel}$) et la grandeur ($M_K$) pour former ou pour modifier une courbe caractéristique (131), et
- on utilise la courbe caractéristique enregistrée (131) pour commander le couple d'embrayage ($M_K$) transmis par l'embrayage assisté.

**2.** Système selon la revendication 1,
**caractérisé en ce que**
comme grandeur de réglage on utilise la course d'embrayage (S), l'angle de rotation d'un organe d'actionnement en forme de moteur d'actionnement (1105, 1105'), la force exercée sur un élément élastique de l'embrayage et/ou la pression d'un système hydraulique reliant l'embrayage au moteur de l'actionneur.

**3.** Système selon la revendication 1,
**caractérisé en ce que**
l'actionneur comporte un moteur pas à pas (1105').

**4.** Système selon la revendication 3,
**caractérisé en ce qu'**
après chaque opération de débrayage ou un nombre d'opérations de débrayage données, on actionne une commande définie (Sp) du moteur pas à pas (1105').

**5.** Système selon la revendication 3,
**caractérisé par**
une barre à crémaillère (1104) coulissante dans sa direction longitudinale pour actionner l'embrayage par un moteur pas à pas (1105') ou certaines opérations de débrayage pour faire passer la barre à crémaillère (1104) par la commande (Sp) du moteur pas à pas (1105') dans une position définie de préférence contre une butée mécanique (1109).

Fig. 1a

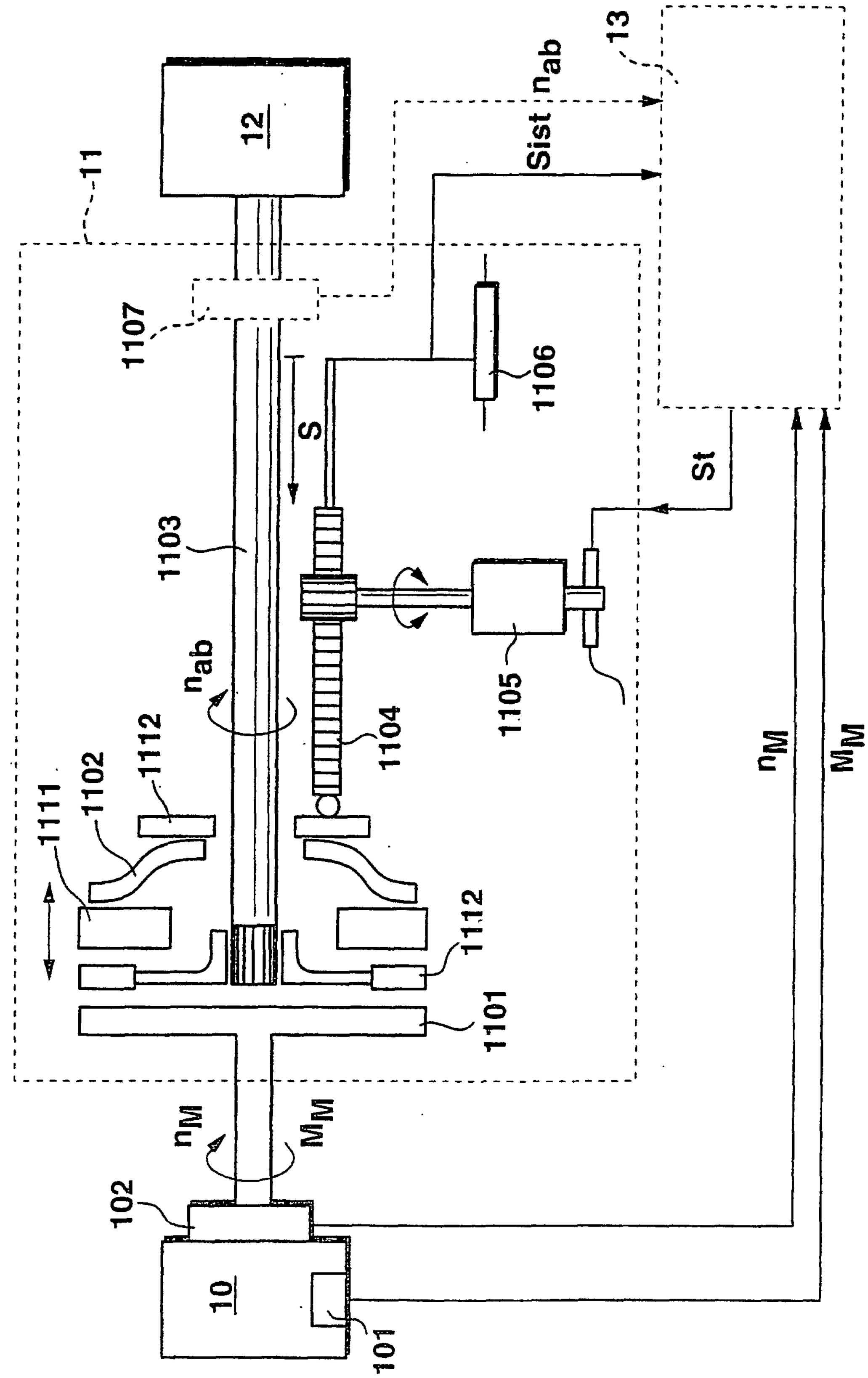

11
12
13
Sist
$n_{ab}$
1107
1106
S
St
1103
1104
1105
$n_{ab}$
1112
1102
1111
1112
1101
$n_M$
$M_M$
102
10
101
$n_M$
$M_M$

Fig. 1b

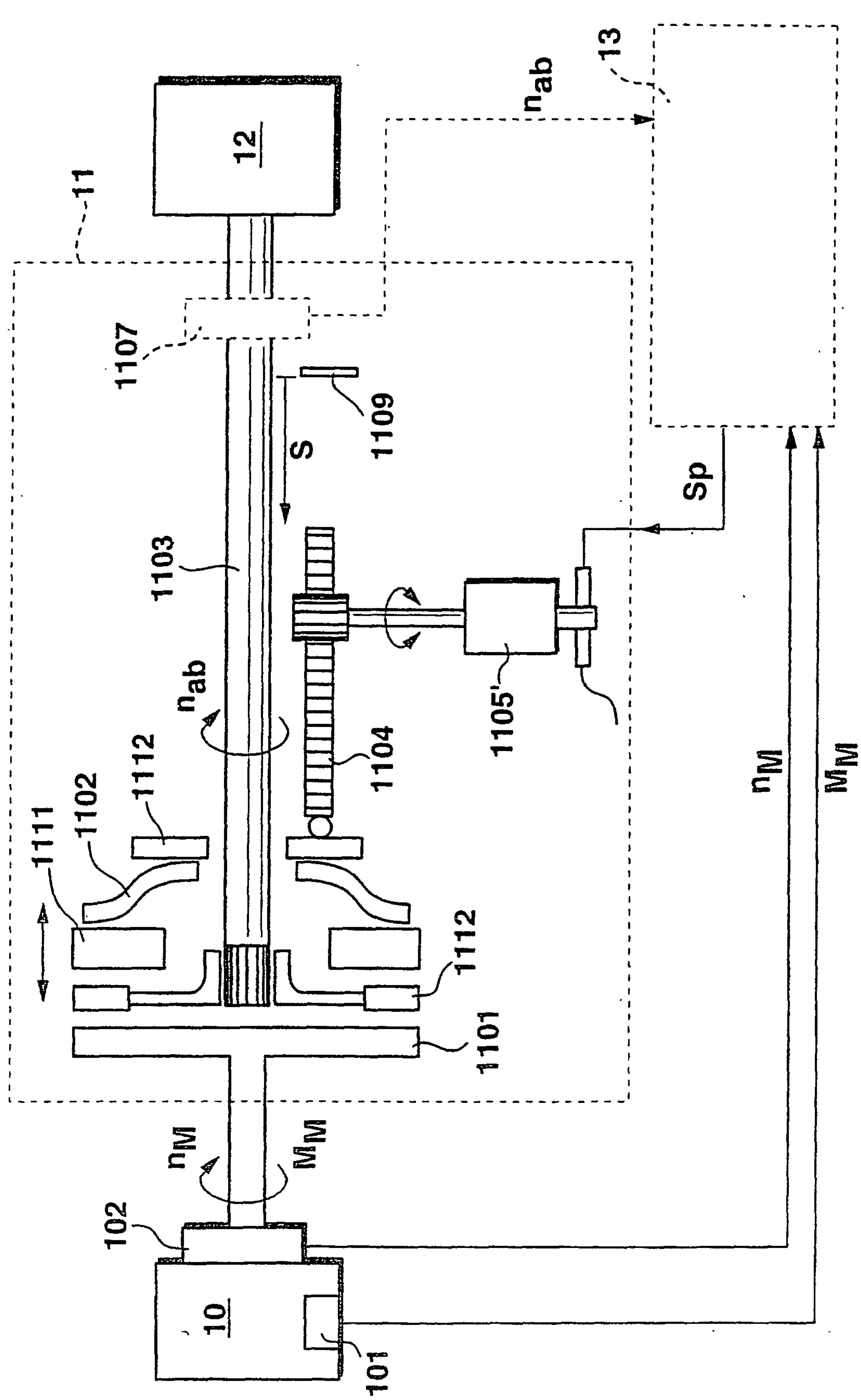
12
11
13
$n_{ab}$
1107
1109
S
1103
$n_{ab}$
Sp
1104
1105'
$n_M$
$M_M$
1111
1102
1112
1112
1101
$n_M$
$M_M$
102
10
101

Fig. 2

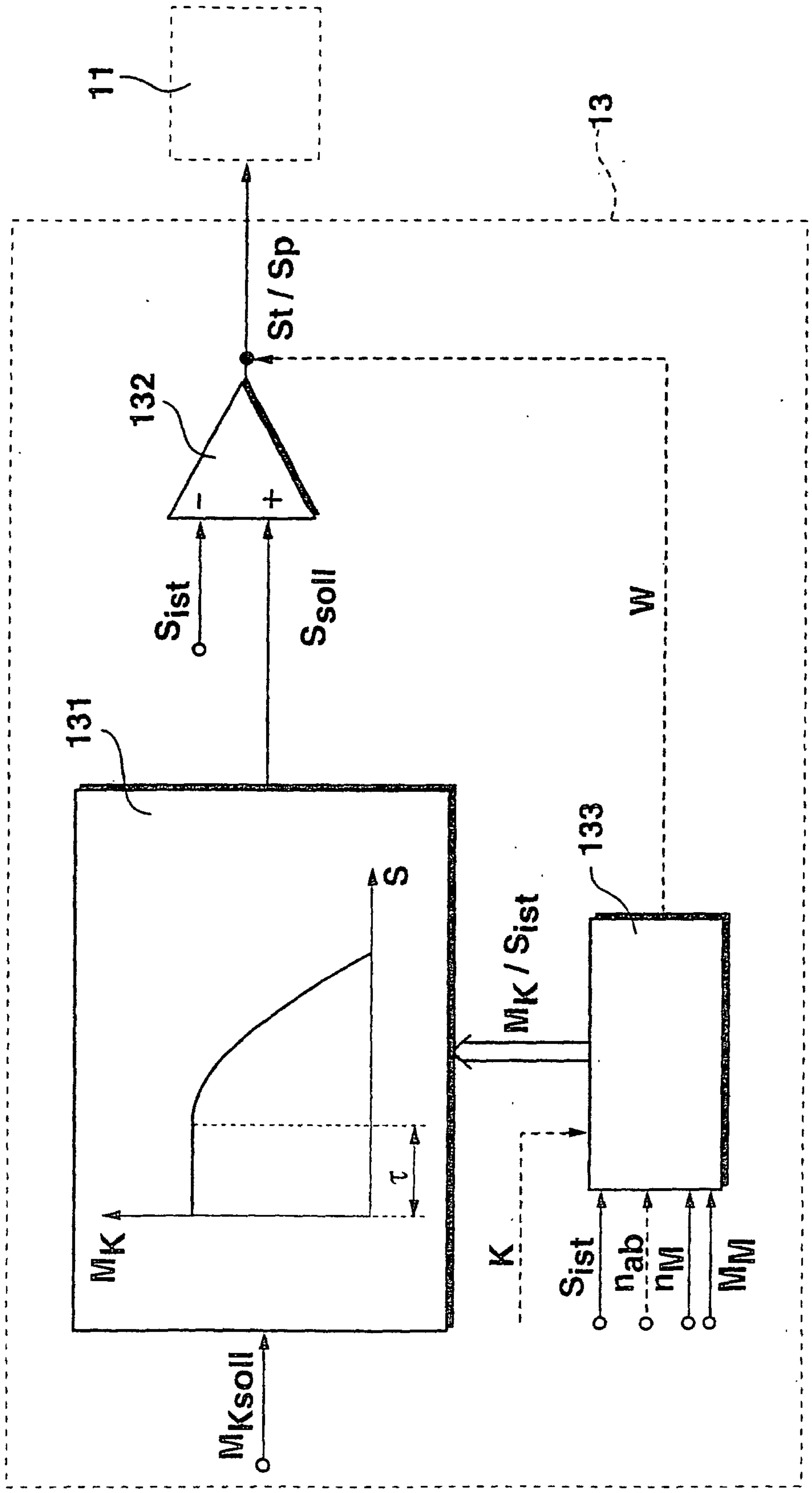
11
13
St / Sp
132
-
+
$S_{ist}$
$S_{soll}$
W
131
S
$M_K$
τ
$M_K$ / $S_{ist}$
133
K
$S_{ist}$
$n_{ab}$
$n_M$
$M_M$
$M_{Ksoll}$

Fig. 3

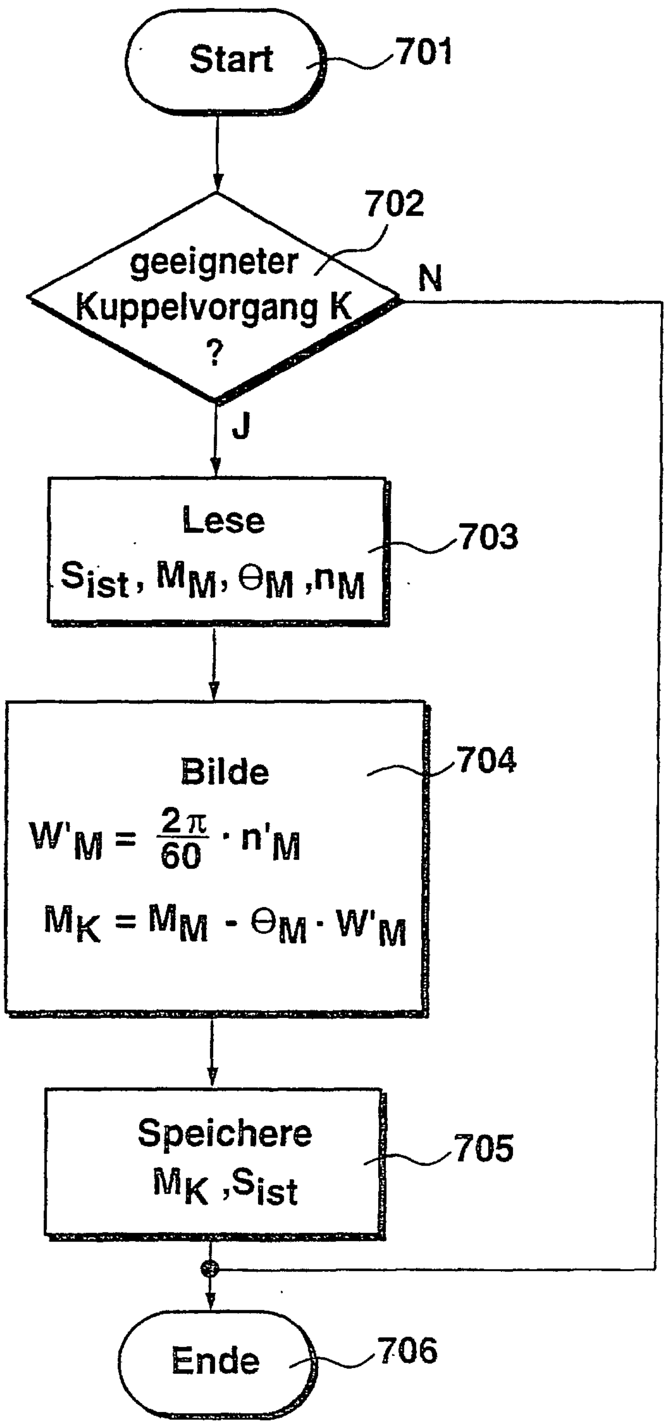
Start
701
702
geeigneter
Kuppelvorgang K
?
N
J
Lese
$S_{ist}, M_M, \Theta_M, n_M$
703
Bilde
$W'_M = \frac{2\pi}{60} \cdot n'_M$
$M_K = M_M - \Theta_M \cdot W'_M$
704
Speichere
$M_K, S_{ist}$
705
Ende
706

# Fig. 4